# EUROPÄISCHE PATENTANMELDUNG

(11) **EP 0 590 260 A1**
(43) Veröffentlichungstag der Anmeldung: **06.04.1994**
(21) Anmeldenummer: 93111783.2
(22) Anmeldetag: 23.07.1993
(51) Int. Cl.: C25B 1/04, C25B 11/00

(54) **Verfahren zur katalytischen Aktivierung einer Kathode**

(30) Priorität: 01.10.1992 DE 4232958
(71) Anmelder: MTU MOTOREN- UND TURBINEN-UNION FRIEDRICHSHAFEN GMBH, D-88040 Friedrichshafen (DE)
(72) Erfinder: Block, Reiner, D-64283 Darmstadt (DE); Schmidt, Thomas, D-64287 Darmstadt (DE); Wendt, Hartmut, Prof.Dr., D-64807 Dieburg (DE)

(57) **Zusammenfassung**

Zur katalytischen Aktivierung einer Kathode für die alkalische Wasserelektrolyse setzt man dem Elektrolyten in dem Elektrolyseur ein wasserlösliches Platinmetallsalz zu, um das Platinmetall bei Betrieb des Elektrolyseurs an der Kathode galvanisch abzuscheiden.

## Beschreibung

Die Erfindung bezieht sich auf ein Verfahren zur katalytischen Aktivierung einer Kathode für die alkalische Wasserelektrolyse mit einem Platinmetall.

Durch die katalytische Aktivierung wird die Überspannung der Kathode herabgesetzt. Dadurch werden beträchtliche Verminderungen der Zellspannung sowie des Energieverbrauchs bei der alkalischen Wasserelektrolyse möglich. Zur katalytischen Aktivierung der Kathode ist es bekannt, neben Raney-Nickel Übergangsmetallegierungen, wie Nickel/Molybdän, Platinmetalloxide, wie RuO₂_{,} sowie Platinmetalle, wie Platin, Palladium, Ruthenium u. a. zu verwenden (vgl. "S. Trasatti in H. Gerischer, W. Tobias (Eds.) Advances in Electrochem. Science and Engineering Vol. 2, VCH 1992, S. 2-85" und DE 36 12 790 C2).

Dazu wird auf die Kathode z. B. eine Lösung eines Salzes des Platinmetalls aufgetragen, worauf die Kathode erwärmt wird, um das Salz thermisch zu zersetzen und das bei der Zersetzung gebildete Platinmetall durch Anlegieren an der Kathodenoberfläche zu fixieren.

Die Aktivierung einer so hergestellten Kathode läßt jedoch mit der Zeit nach. Das bekannte Aktivierungsverfahren hat deshalb den Nachteil, daß bei nachlassender Aktivierung der gesamte Zellenblock des alkalischen Wasserelektrolyseurs zerlegt werden muß, um neue Zellen mit aktivierten Kathoden einzubauen. Die verbrauchten Kathoden werden durch Reinigen der Oberfläche, z. B. durch Sandstrahlen, und neues Aufbringen der Aktivierungsschicht wieder aktiviert. Das bekannte Aktivierungsverfahren ist also sehr arbeitsaufwendig.

Aufgabe der Erfindung ist es daher, ein wesentlich vereinfachtes Verfahren zur katalytischen Aktivierung der Kathoden eines alkalischen Wasserelektrolyseurs bereitzustellen.

Dies wird erfindungsgemäß durch die im Anspruch 1 angegebene Maßnahme erreicht. In den Unteransprüchen sind vorteilhafte Ausgestaltungen der Erfindung wiedergegeben.

Das erfindungsgemäße Verfahren kann also im alkalischen Wasserelektrolyseur, d. h. in situ durchgeführt werden.

Der alkalische Wasserelektrolyseur kann beispielsweise einen Zellenstapel in Filterpressenanordnung aufweisen. Der Zellenstapel kann dabei aus Verbundplatten gebildet sein, die jeweils aus einer porösen Nickel-Anode, einem Diaphragma und einer porösen Nickel-Kathode gebildet werden. Diese Elektrode/Diaphragma/Elektrode-Verbundplatten werden auch als EDE-Einheiten bezeichnet. Die porösen Elektrodenschichten können durch Sintern von Nickelpulver oder reduktives Sintern von Nickeloxid gebildet werden. Derartige Verbundplatten werden beispielsweise in DE 32 24 555 A1 und DE 32 24 556 A1 beschrieben. Die Metallkathoden, die erfindungsgemäß aktiviert werden, können jedoch auch durch ein Blech, ein Lochblech, ein Netz oder ein Streckmetall gebildet werden. Das Metall ist vorzugsweise Nickel.

Die Stromdichte des Elektrolyseurs beträgt im Betrieb vorzugsweise zwischen 20 und 2000 mA/cm², normalerweise 100 bis 1500 mA/cm². Als Elektrolyt wird eine wäßrige Kaliumhydroxid-ggf. auch Natriumhydroxid-Lösung verwendet, und zwar mit einer Konzentration von mindestens 15 Gew.-%, vorzugsweise 30 bis 40 Gew.-%.

Die Temperatur des Elektrolyten liegt bei Betrieb des Elektrolyseurs nahe dem Siedepunkt, d. h. bei 80 bis 120°C. Wenn der Elektrolyseur unter Druck steht, kann die Tempertur auch höher sein und z. B. bis 150°C betragen. Eine möglichst hohe Temperatur des Elektrolyten führt zu einer weiteren Herabsetzung der Überspannung durch thermische Aktivierung.

Das erfindungsgemäße Verfahren besteht also im wesentlichen darin, daß dem Elektrolyten des alkalischen Wasserelektrolyseurs ein Platinmetallsalz, vorzugsweise als Lösung, zugegeben wird, wobei sich das zugegebene Platinmetall an der Kathode galvanisch abscheidet. D. h., das erfindungsgemäße Verfahren kann während des Betriebs des Elektrolyseurs, also während der Wasserelektrolyse, durchgeführt werden. Die galvanische Abscheidung kann unter den gleichen Bedingungen wie beim Betrieb des Elektrolyseurs zur Wasserelektrolyse erfolgen. Es hat sich jedoch als zweckmäßig erwiesen, während der galvanischen Abscheidung des Platinmetalls die Stromdichte und/oder die Temperatur des Elektrolyten etwas zu senken. So hat sich eine Temperatur des Elektrolyten von 20 bis 50°C, insbesondere 20 bis 60°C für die galvanische Abscheidung des Platinmetalls als besonders geeignet erwiesen.

Die Stromdichte sollte allerdings nicht auf weniger als 10 mA/cm² herabgesetzt werden, weil sonst die galvanische Abscheidung zu lange dauert.

Ferner hat sich gezeigt, daß insbesondere bei höheren Stromdichten sich das Platinmetall an der Kathode in Form haarfeiner Dendriten abscheidet, die mechanisch nicht stabil sind, also leicht wieder abfallen, so daß die Aktivierung der Kathoden nach kurzer Zeit wieder verloren geht. Eine Stromdichte von mehr als 2 A/cm², vorzugsweise mehr als 1 A/cm² sollte daher möglichst vermieden werden.

Um eine Kathode zu erhalten, deren Aktivierung auch nach mehreren Monaten oder mehreren Jahren nicht nachläßt, ist es also erforderlich, daß das Platinmetall nicht in Form eines dendritischen Niederschlags an der Kathode abgeschieden wird, sondern als geschlossene Schicht. Dies wird über die Stromdichte beim Abscheidevorgang erreicht.

Die Beschichtungsmenge sollte wenigstens 0,1 mg Platinmetall pro cm² der zu beschichtenden Kathodenfläche betragen, vorzugsweise 0,5 mg/cm². Wenn die Beschichtungsmenge und damit die Schichtdicke zu gering wird, dürften nämlich in der geschlossenen Schicht Fehlstellen auftreten, an denen dann der mechanische Angriff bevorzugt erfolgt, wodurch die Dauer der Aktivierung herabgesetzt wird.

Durch die nach dem erfindungsgemäßen Verfahren aufgebrachte Platinmetallschicht wird die kathodische Überspannung bei einer Stromdichte des Elektrolyseurs von 1 A/cm² bei einer Betriebstemperatur von 80°C um etwa 200 mV und bei einer Betriebstemperatur von 120°C um etwa 240 mV herabgesetzt, und zwar bei einem Elektrolyseur vom Filterpressentyp, dessen Zellenstapel aus den vorstehend erwähnten EDE-Einheiten mit poröser Nickel-Kathode bestehen. Die Kathode war dabei mit 4 mg Ruthenium pro cm² Kathodenfläche beschichtet. Die angegebene Herabsetzung der Überspannung von 200 bzw. 240 mV bezieht sich dabei auf den gleichen Zellenstapel, jedoch ohne Aktivierung der Kathoden.

Gegenüber einer mit Platinschwamm bedeckten Platinkathode, sog. RHE- oder reversible Wasserstoffelektrode, beträgt die Herabsetzung der Überspannung der erfindungsgemäßen aktivierten Kathoden bei einer Stromdichte von 300 mA/cm² noch 80 mV.

Die Gesamtmenge des dem Elektrolyten zuzusetzenden Platinmetallsalzes ergibt sich aus der Größe der zu aktivierenden Kathodenfläche in dem Elektrolyseur und der gewünschten Beschichtungsmenge des Platinmetalls pro cm² Kathodenfläche. Das Platinmetallsalz wird dem Elektrolyten des Elektrolyseurs vorzugsweise als wäßrige Lösung zugesetzt. Das Platinmetallsalz kann z. B. ein Nitrat, ein Chlorid oder ein Acetonat sein.

Die Abscheidungsdauer ist von der Stromdichte, der Temperatur der gewünschten Beschichtungsmenge und dgl. abhängig. Sie kann zwischen 2 h und 5 Tagen betragen, normalerweise liegt sie jedoch zwischen 1 und 3 Tagen, wobei, wie gesagt, die Wasserstoffproduktion weiterlaufen kann, wenn auch ggf. auf einem niedrigeren Niveau.

Wie die bisher durchgeführten Versuche gezeigt haben, nimmt die Aktivierung der erfindungsgemäß aktivierten Kathoden auch nach einem Betrieb des Elektrolyseurs von mehreren Monaten nicht nennenswert ab. Das erfindungsgemäße Verfahren hat den großen Vorteil, daß die Aktivierung der Kathode bei einer etwaigen Abnahme von deren katalytischer Aktivität problemlos erneuert werden kann. D. h., man kann die Aktivierung bei laufendem Elektrolyseur mit äußerst geringem Arbeitsaufwand beliebig oft wiederholen, wenn der Wirkungsgrad der Aktivierung nachlassen sollte.

Das Platinmetall scheidet sich bei dem erfindungsgemäßen Verfahren nur an der Kathode ab. Die Anode bleibt also unbeeinträchtigt.

Besonders stabile, geschlossene Platinmetalloberflächen werden erhalten, wenn das Platinmetall durch einen Komplexbildner komplexiert wird. Dazu kann das Platinmetall, zusammen mit dem Komplexbildner, dem Elektrolyten des Elektrolyseurs zugesetzt werden.

Als Komplexbildner können beispielsweise Ethylendiaminotetraessigsäure, Trinitriloessigsäure und andere Aminocarbonsäuren verwendet werden.

Jedoch können auch andere Platinmetalle eingesetzt werden, beispielsweise Platin selbst, das z. B. als H₂PtCl₆ oder PtCl₂ eingesetzt werden kann.

## Patentansprüche

1. Verfahren zur katalytischen Aktivierung einer Kathode für die alkalische Wasserelektrolyse mit einem Platinmetall, dadurch gekennzeichnet, daß man dem Elektrolyten in dem alkalischen Wasserelektrolyseur ein wasserlösliches Platinmetallsalz zusetzt und die Platinmetallionen des Salzes bei Betrieb des Elektrolyseurs an der Kathode galvanisch abscheidet.

2. Verfahren nach Anspruch 1, dadurch gekennzeichnet, daß zur Abscheidung der Platinmetallionen die Stromdichte auf 10 mA/cm² oder mehr eingestellt wird.

3. Verfahren nach Anspruch 1 oder 2, dadurch gekennzeichnet, daß die Temperatur des Elektrolyten bei der Abscheidung der Platinmetallionen auf 20 bis 60°C eingestellt wird.

4. Verfahren nach einem der vorstehenden Ansprüche, dadurch gekennzeichnet, daß die Menge des abgeschiedenen Platinmetalls mindestens 0,1 mg pro cm² der zu aktivierenden Kathodenfläche beträgt.

5. Verfahren nach einem der vorstehenden Ansprüche, dadurch gekennzeichnet, daß das Platinmetallsalz ein Chlorid, Nitrat oder Acetonat ist.

6. Verfahren nach einem der vorstehenden Ansprüche, dadurch gekennzeichnet, daß das Platinmetallsalz in komplexierter Form eingesetzt wird.

7. Verfahren nach Anspruch 6, dadurch gekennzeichnet, daß als Komplexbildner für das Platinmetall Ethylendiaminotetraessigsäure, Trinitriloessigsäure oder eine andere Aminocarbonsäure verwendet wird.

8. Verfahren nach Anspruch 6 oder 7, dadurch gekennzeichnet, daß das stöchiometrische Verhältnis des Komplexbildners zu dem Platinmetall 1 bis 1,5 beträgt.

9. Verfahren nach einem der vorstehenden Ansprüche, dadurch gekennzeichnet, daß das Platinmetall Ruthenium ist.
